# EUROPÄISCHE PATENTANMELDUNG

(11) **EP 4 570 595 A1**
(43) Veröffentlichungstag der Anmeldung: **18.06.2025**
(21) Anmeldenummer: 24208525.6
(22) Anmeldetag: 24.10.2024
(51) Int. Cl.: B60R 11/04, B62D 33/06

(54) **FAHRERHAUS MIT SENSOREINREICHTUNG, NUTZFAHRZEUG MIT DEM FAHRERHAUS UND VERFAHREN ZUR MONTAGE DES FAHRERHAUSES**

(30) Priorität: 16.11.2023 DE 102023131943
(71) Anmelder: MAN Truck & Bus SE, 80995 München (DE)
(72) Erfinder: Schmitz, Andreas, 80995 München (DE)

(57) **Zusammenfassung**

Die vorliegende Erfindung betrifft ein Fahrerhaus (50) für ein Nutzfahrzeug (100), vorzugsweise Lastkraftwagen, insbesondere Sattelzugmaschine. Das Fahrerhaus (50) umfasst eine Windschutzscheibe (40) und zumindest eine Sensoreinrichtung (30A, 30B, 30C) zur Erfassung von zumindest einer Umgebungsgröße, vorzugsweise wobei die zumindest eine Sensoreinrichtung (30A, 30B, 30C) nach vorne ausgerichtet und/oder durch die Windschutzscheibe (40) hindurchschauend angeordnet ist. Das Fahrerhaus (50) umfasst ferner eine Verkleidungsstruktur (10), die an einem oberen Endbereich der Windschutzscheibe (40) innerhalb des Fahrerhauses (50) und/oder hinter der Windschutzscheibe (40) angeordnet ist. Die zumindest eine Sensoreinrichtung (30A, 30B, 30C) ist in oder an der Verkleidungsstruktur (10) angeordnet. Die Erfindung betrifft ferner ein Nutzfahrzeug (40) mit dem Fahrerhaus (50) und ein Verfahren zur Montage des Fahrerhauses (50).

## Beschreibung

Die Erfindung betrifft ein Fahrerhaus mit zumindest einer Sensoreinrichtung, ein Nutzfahrzeug mit dem Fahrerhaus und ein Verfahren zur Montage des Fahrerhauses.

Für ein zukünftiges autonomes Fahren von Nutzfahrzeugen, insbesondere Lastkraftwagen, ist ein Anbringen verschiedener Sensoren, z. B. Kameras, Radarsensoren und/oder Lidarsensoren, an den Nutzfahrzeugen notwendig.

Um diese Sensoren bestmöglich vor Umwelteinflüssen, z. B. Regen, Schnee und/oder hohen Temperaturen, und/oder äußeren Einwirkungen, z. B. Kontakt zu anderen Verkehrsteilnehmern oder Bäumen, hervorstehenden Dächer, usw., zu schützen, müssen diese Sensoren bestmöglich geschützt werden.

Bekannte Sensoren sind z. B. freistehend auf dem Dach des jeweiligen Nutzfahrzeugs angeordnet und z. B. an Aluminiumprofilen befestigt. Diese bekannte Anordnung bietet jedoch keinen Schutz vor Umwelteinflüssen oder Fremdeinwirkungen. Ferner ist die Anordnung auf dem Dach aerodynamisch unvorteilhaft und erschwert zusätzlich die Installation und z. B. die Reinigung der Sensoren. Darüber hinaus bietet diese Anordnung keinen Schutz vor möglichem Vandalismus.

Daher ist es Aufgabe der Erfindung, eine verbesserte Anordnung einer Sensoreinrichtung für ein Nutzfahrzeug bereitzustellen. Insbesondere ist es z. B. eine Aufgabe der Erfindung, einen verbesserten Schutz der Sensoreinrichtung vor Umwelteinflüssen und/oder äußeren Einwirkungen zu ermöglichen.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten allgemeinen Aspekt der Erfindung wird ein Fahrerhaus für ein Nutzfahrzeug, vorzugsweise Lastkraftwagen, insbesondere Sattelzugmaschine, bereitgestellt.

Das Fahrerhaus umfasst eine Windschutzscheibe und zumindest eine Sensoreinrichtung zur Erfassung von zumindest einer Umgebungsgröße. Die zumindest eine Sensoreinrichtung kann vorzugsweise (insbesondere in Vorwärtsfahrtrichtung des Nutzfahrzeugs) nach vorne (schauend) ausgerichtet und/oder durch die Windschutzscheibe hindurchschauend angeordnet sein.

Das Fahrerhaus umfasst ferner eine, insbesondere vormontierte, Verkleidungsstruktur, die an einem oberen Endbereich der Windschutzscheibe innerhalb (insbesondere eines Fahrerraums und/oder eines Innenraums) des Fahrerhauses und/oder hinter der Windschutzscheibe angeordnet ist. Die zumindest eine Sensoreinrichtung ist, insbesondere vormontiert, in oder an der Verkleidungsstruktur angeordnet.

Durch die vorliegende Offenbarung gemäß dem ersten allgemeinen Aspekt wird somit ein Fahrerhaus bereitgestellt, das durch die Anordnung der zumindest einen Sensoreinrichtung innerhalb des Fahrerhauses einen verbesserten Schutz vor möglichen Umwelt- und Fremdeinflüssen liefert als z. B. eine Anordnung auf dem Dach des Fahrerhauses, bei der die Sensoreinrichtung den Umwelt- und Fremdeinflüssen von allen Seiten im Wesentlichen ungeschützt ausgesetzt ist.

Ferner kann die zumindest eine Sensoreinrichtung aufgrund der Integration in die Verkleidungsstruktur derart angeordnet sein, dass das Sichtfeld eines Fahrers möglichst nicht beeinträchtigt ist und das gesetzlich vorgeschriebene Fahrersichtfeld gewährleistet bleibt.

Durch die Integration in die Verkleidungsstruktur kann die zumindest eine Sensoreinrichtung zudem auf vereinfachte Weise am Nutzfahrzeug angebracht werden. So sind z. B. keine bzw. möglichst geringe Modifikationen der Karosserie des Fahrerhauses bzw. des Nutzfahrzeugs notwendig, da die zumindest eine Sensoreinrichtung nicht direkt an bzw. in der Karosserie des Fahrerhauses angebracht oder eingesetzt werden muss.

Stattdessen kann z. B. eine einfache Vormontage erfolgen, bei der die zumindest eine Sensoreinrichtung in die Verkleidungsstruktur integriert wird, wobei die Verkleidungsstruktur anschließend lediglich am Fahrerhaus angebracht werden muss.

Zusätzlich wird die Aerodynamik des Fahrerhauses bzw. des Nutzfahrzeugs durch die Anordnung der zumindest einen Sensoreinrichtung nicht unvorteilhaft beeinflusst, insbesondere im Gegensatz zu bekannten Sensoriken, die an einer Außenseite des Fahrerhauses angebracht sind.

Gemäß einer Ausführungsform kann die zumindest eine Sensoreinrichtung zumindest abschnittsweise in der Verkleidungsstruktur umhaust und/oder integriert sein.

Gemäß einer Ausführungsform kann das Fahrerhaus ferner einen Träger (insbesondere eines Fahrerhausrohbaus) umfassen. Der Träger kann insbesondere ein Querträger sein. Das Fahrerhaus kann einen Fahrerhausrohbau umfassen, der den Träger aufweist.

Der Träger kann vorzugsweise eine Windschutzscheibenöffnung des Fahrerhauses oberseitig begrenzen und/oder sich zwischen zwei A-Säulen des Fahrerhauses erstrecken. Die Verkleidungsstruktur kann zur Verkleidung des Trägers, vorzugsweise von unten (insbesondere in Bezug zu einer Höhenrichtung des Fahrerhauses), am Träger angeordnet sein.

Gemäß einer Ausführungsform kann der Träger ein Windlauf (und/oder Windlaufträger) sein. Die Verkleidungsstruktur kann zumindest abschnittsweise als Windlaufverkleidung (und/oder Windlaufträgerverkleidung) ausgeführt sein.

Gemäß einer Ausführungsvariante kann die Verkleidungsstruktur einen, vorzugsweise länglichen, Grundkörper aufweisen. Der Grundkörper (und/oder eine Längsrichtung des Grundkörpers) kann sich in Längsrichtung der Verkleidungsstruktur, vorzugsweise entlang einer im Wesentlichen gesamten Länge der Verkleidungsstruktur, erstrecken.

Die zumindest eine Sensoreinrichtung kann an einer Oberseite des Grundkörpers (insbesondere in Bezug zu einer Höhenrichtung des Fahrerhauses) angeordnet sein. Die Oberseite des Grundkörpers kann insbesondere dem Träger zugewandt sein. Die zumindest eine Sensoreinrichtung kann insbesondere nicht im Grundkörper eingebettet und/oder im Wesentlichen alleinstehend auf der Oberseite angeordnet sein.

Die zumindest eine Sensoreinrichtung kann zugänglich und/oder austauschbar an oder in der Verkleidungsstruktur, vorzugsweise an der Oberseite des Grundkörpers, angeordnet sein. Die zumindest eine Sensoreinrichtung kann vormontiert an oder in der Verkleidungsstruktur, vorzugsweise an der Oberseite des Grundkörpers, angeordnet sein.

Die zumindest eine Sensoreinrichtung kann mehrere Sensoreinrichtungen aufweisen, die, insbesondere alle, z. B. in einer Höhe und/oder in einer Ebene, vorzugsweise an der Oberseite des Grundkörpers, angeordnet sein können.

Gemäß einer Ausführungsvariante kann die Verkleidungsstruktur eine Vorderseite aufweisen, die der Windschutzscheibe zugewandt ist. Die Vorderseite kann z. B. zumindest eine Öffnung aufweisen, an oder in der die zumindest eine Sensorvorrichtung angeordnet ist.

Die Vorderseite der Verkleidungsstruktur kann zumindest abschnittsweise an (einer Innenoberfläche) der Windschutzscheibe anliegen. Die Vorderseite kann zumindest abschnittsweise formangepasst zu einer Innenoberfläche der Windschutzseite ausgebildet sein. Alternativ kann die Vorderseite und/oder die Verkleidungsstruktur zur Windschutzscheibe beabstandet, z. B. mit einem Abstand kleiner 5 cm, 2 cm oder 1 cm, angeordnet sein.

Gemäß einer Ausführungsform kann die Verkleidungsstruktur ferner eine mit dem Grundkörper verbundene, und vorzugsweise in Längsrichtung der Verkleidungsstruktur verlaufende, Abdeckstruktur, vorzugsweise Abdeckschiene, zur Abdeckung der zumindest einen Sensoreinrichtung aufweisen.

Gemäß einer Ausführungsform kann die Abdeckstruktur mit dem Träger direkt verbunden, vorzugsweise verschraubt, sein. Die Abdeckstruktur kann zumindest einen Verbindungsabschnitt, insbesondere zumindest eine Schrauböffnung, aufweisen. Der Träger kann zumindest einen (mit dem zumindest einen Verbindungsabschnitt korrespondierenden) Träger-Verbindungsabschnitt, insbesondere zumindest eine Schrauböffnung, aufweisen.

Gemäß einer Ausführungsvariante kann das Fahrerhaus ferner eine Dachstruktur, vorzugsweise eine Dachablage und/oder einen Geräteträger, umfassen. Die Dachstruktur kann in einem Dachbereich innerhalb des Fahrerhauses angeordnet sein. Die Verkleidungsstruktur kann, vorzugsweise an einem der Windschutzscheibe abgewandten Ende, mit der Dachstruktur verbunden sein. Die Verkleidungsstruktur kann insbesondere an oder in der Dachstruktur eingehängt sein. Durch die Anordnung der zumindest einen Sensorvorrichtung in der Verkleidungsstruktur anstatt an einer anderen Position innerhalb des Fahrerhauses wird somit der Stauraum im Dachbereich des Fahrerhauses, z. B. in der Dachablage bzw. einer Gepäckablage, nicht beeinflusst.

Das Fahrerhaus kann eine Dachkonstruktion umfassen, die die Dachstruktur aufweist. Die Dachkonstruktion kann z. B. mit dem Fahrerhausrohbau verbunden, insbesondere auf dem Fahrerhausrohbau aufgesetzt, sein. Die Verkleidungsstruktur kann (gleichzeitig) mit dem Fahrerhausrohbau und der Dachkonstruktion verbunden sein.

Gemäß einer Ausführungsform kann die Verkleidungsstruktur zumindest ein Verbindungselement, vorzugsweise zumindest ein Führungselement, aufweisen, das an der Oberseite der Verkleidungsstruktur, vorzugsweise an einem der Windschutzscheibe abgewandten Endbereich und/oder nach oben (z. B. in Hochrichtung des Fahrerhauses) abragend, ausgebildet sein kann.

Die Dachstruktur kann zumindest ein Dach-Verbindungselement, vorzugsweise zumindest eine Kulissenführung, aufweisen. Das zumindest eine Verbindungselement kann mit dem zumindest einen Dach-Verbindungselement verbunden sein. Das zumindest eine Verbindungselement kann insbesondere an oder in dem zumindest einen Dach-Verbindungselement eingehängt sein.

Durch die Verbindung mit der Dachstruktur wird somit z. B. eine ergonomische Montage der Verkleidungsstruktur innerhalb des Fahrerhauses ermöglicht. Das Vorsehen von zumindest einer Kulissenführung wird die Montage ferner vereinfacht.

Das zumindest eine Verbindungselement und/oder das zumindest eine Dach-Verbindungselement kann (oder können) ausgebildet sein, ein Verschwenken der Verkleidungsstruktur nach einem Verbinden der Verkleidungsstruktur mit der Dachstruktur zu ermöglichen.

Gemäß einer Ausführungsform kann die zumindest eine Sensoreinrichtung mittels zumindest einer Rast-, Schraub und/oder Steckverbindung in oder an der Verkleidungsstruktur befestigt sein.

Gemäß einer Ausführungsvariante kann die zumindest eine Sensoreinrichtung jeweils zumindest eine Kamera, eine Radar-Sensoreinheit und/oder Lidar-Sensoreinheit umfassen.

Gemäß einer Ausführungsform kann die zumindest eine Sensoreinrichtung eine erste Sensoreinrichtung, die an einem fahrerseitigen Endbereich der Windschutzscheibe und/oder der Verkleidungsstruktur angeordnet ist, aufweisen.

Die zumindest eine Sensoreinrichtung kann eine zweite Sensoreinrichtung, die an einem Mittelbereich der Windschutzscheibe und/oder der Verkleidungsstruktur angeordnet ist, aufweisen.

Die zumindest eine Sensoreinrichtung kann eine dritte Sensoreinrichtung, die an einem beifahrerseitigen Endbereich der Windschutzscheibe und/oder der Verkleidungsstruktur angeordnet ist, aufweisen.

Gemäß einer Ausführungsform kann das Fahrerhaus ferner eine Scheibenwischervorrichtung zum Wischen zumindest eines Wischbereichs umfassen, wobei die zumindest eine Sensoreinrichtung hinter dem Wischbereich angeordnet sein kann. Der Wischbereich kann insbesondere ein Bereich einer äußeren Windschutzscheibenoberfläche (der Windschutzscheibe) sein. Ein Schnittbereich eines Erfassungsbereichs (auch als Sichtfeld bezeichnet) der zumindest einen Sensoreinrichtung und der äußeren Windschutzscheibenoberfläche kann, insbesondere vollständig, im zumindest einen Wischbereich liegen.

Durch die Scheibenwischervorrichtung wird somit eine bedarfsweise und z. B. möglichst ideale Reinigung der Sicht der zumindest einen Sensoreinrichtung durch die Windschutzscheibe hindurch ermöglicht.

Gemäß einer Ausführungsform kann die Scheibenwischervorrichtung einen (Hilfs-)Scheibenwischer aufweisen, der oberhalb der Windschutzscheibe, und vorzugweise oberhalb einer der zumindest einen Sensoreinrichtung (insbesondere in Bezug zur Höhenrichtung des Fahrerhauses), schwenkbar gelagert sein kann.

Alternativ oder ergänzend kann die Scheibenwischervorrichtung zumindest einen (Haupt-)Scheibenwischer, vorzugsweise zwei, insbesondere gleichlaufende oder gegenläufige, (Haupt-)Scheibenwischer, aufweisen, der unterhalb der Windschutzscheibe schwenkbar gelagert sein kann.

Beispielsweise kann die zumindest eine Sensoreinrichtung die erste Sensoreinrichtung und die zweite Sensoreinrichtung aufweisen und kann die Scheibenwischervorrichtung zwei, vorzugsweise gleichlaufende, (Haupt-)Scheibenwischer aufweisen.

Alternativ kann die zumindest eine Sensoreinrichtung die erste Sensoreinrichtung und die dritte Sensoreinrichtung aufweisen und kann die Scheibenwischervorrichtung zwei, vorzugsweise gegenläufige, (Haupt-)Scheibenwischer aufweisen.

Ferner alternativ kann die zumindest eine Sensoreinrichtung die erste Sensoreinrichtung, die zweite Sensoreinrichtung und die dritte Sensoreinrichtung aufweisen. Die Scheibenwischervorrichtung kann zwei, vorzugsweise gleichlaufende, (Haupt-)Scheibenwischer und einen (Hilfs-)Scheibenwischer, der vorzugweise oberhalb der dritten Sensoreinrichtung schwenkbar gelagert sein kann, aufweisen. Die Scheibenwischervorrichtung kann zwei, vorzugsweise gegenläufige, (Haupt-)Scheibenwischer und einen (Hilfs-)Scheibenwischer, der vorzugweise oberhalb der zweiten Sensoreinrichtung schwenkbar gelagert sein kann, aufweisen.

Gemäß einer Ausführungsvariante kann die zumindest eine Sensoreinrichtung mehrere Sensoreinrichtungen aufweisen. Die Scheibenwischervorrichtung kann mehrere Scheibenwischer aufweisen. Eine Anzahl der mehreren Scheibenwischer kann z. B. einer Anzahl der mehreren Sensoreinrichtungen entsprechen und/oder jeweils einer der mehreren Scheibenwischer einer der mehreren Sensorvorrichtungen zugeordnet sein.

Gemäß einer Ausführungsform kann die Verkleidungsstruktur ferner einen Längskanal aufweisen, der zum Führen eines Verdunkelungsvorhangs an einer Unterseite der Verkleidungsstruktur ausgebildet sein kann. In den Längskanal kann eine Führungsschiene zum Führen eines Verdunkelungsvorhangs eingesetzt sein.

Das Fahrerhaus und/oder die Verkleidungsstruktur kann zumindest eine Sonnenblende aufweisen. Die zumindest eine Sonnenblende kann an einer Unterseite der Verkleidungsstruktur verschwenkbar angebracht, vorzugsweise angeschraubt, sein. Vorzugsweise kann die zumindest eine Sonnenblende zwischen der Windschutzscheibe und dem Längskanal angeordnet sein.

Das Fahrerhaus und/oder die Verkleidungsstruktur kann zumindest ein Sonnenrollo aufweisen. Das zumindest eine, z. B. elektrische, Sonnenrollo kann an einer Unterseite der Verkleidungsstruktur ausfahrbar angebracht sein. Vorzugsweise kann das zumindest eine Sonnenrolle in Längsrichtung der Verkleidungsstruktur verschiebbar gelagert sein.

Das Fahrerhaus und/oder die Verkleidungsstruktur kann einen Lautsprecher aufweisen. Der Lautsprecher kann in einer nach unten offenen Aufnahme der Verkleidungsstruktur, vorzugsweise in einem Mittenbereich und/oder zwischen zwei Sonnenblenden, aufgenommen sein.

Gemäß einer Ausführungsform kann die die zumindest eine Sensoreinrichtung über zumindest einen signaltechnischen und/oder elektrischen Verbinder mit einem Bordnetz des Nutzfahrzeugs und/oder einem Sensor-Steuergerät signaltechnisch und/oder elektrisch verbunden sein. Der zumindest eine signaltechnische und/oder elektrische Verbinder, z. B. ein Kabelbaum, kann zumindest abschnittsweise oberhalb der Verkleidungsstruktur und/oder innerhalb der Dachkonstruktion des Fahrerhauses angeordnet sein.

Das Fahrerhaus kann ferner zumindest ein Sensor-Steuergerät zur Steuerung der Sensoreinrichtung und/oder zur Weiterverarbeitung der zumindest einen erfassten Umgebungsgröße umfassen. Das zumindest eine Sensor-Steuergerät kann innerhalb des Fahrerhauses, insbesondere an einem Dachbereich, angeordnet (und vorzugsweise, z. B. von einem Fahrer, in einem Fahrerraum innerhalb des Fahrerhauses zugänglich) sein. Das zumindest eine Sensor-Steuergerät kann (in Vorwärtsfahrtrichtung des Nutzfahrzeugs) in einem hinteren, oberen Bereich des Fahrerhauses, insbesondere unterhalb des Dachs und/oder in der Dachkonstruktion, angeordnet sein. Das zumindest eine Sensor-Steuergerät kann an einer Rückwand des Fahrerhauses angeordnet sein.

Ferner kann eine Sensor-Kühlvorrichtung zu Kühlung des zumindest einen Sensor-Steuergeräts in einem oberen Bereich des Fahrerhauses, insbesondere unterhalb des Dachs und/oder in der Dachkonstruktion, angeordnet sein. Die Sensor-Kühlvorrichtung kann, z. B. in etwa mittig, im Dach und/oder in einer Dachluke integriert sein.

Durch die räumlich nahe Anordnung der zumindest einen Sensoreinrichtung, des zumindest einen Sensor-Steuergeräts und vorzugsweise der Sensor-Kühlvorrichtung zueinander kann der Umfang der notwendigen Verkabelung und z. B. die Anzahl an Durchbrüchen oder andersartigen Öffnungen möglichst geringgehalten werden. Entsprechend kann z. B. eine vereinfachte Aufrüstung eines bereits vorhandenen Fahrerhauses bzw. Nutzfahrzeugs mit der hierin offenbarten Sensorik bereitgestellt werden.

Es ist ferner möglich, dass das Fahrerhaus ferner zumindest eine Außen-Sensorvorrichtung aufweist, die außen an der Dachkonstruktion angeordnet ist. Die zumindest eine Außen-Sensorvorrichtung kann z. B. seitlich, insbesondere oberhalb einer Fahrertür und/oder einer Beifahrertür, angeordnet sein. Die zumindest eine Außen-Sensorvorrichtung kann signaltechnisch mit dem Sensor-Steuergerät verbunden sein.

Gemäß einem weiteren allgemeinen Aspekt der Erfindung wird ein Verfahren zur Montage eines Fahrerhauses für ein Nutzfahrzeug, vorzugsweise eines Fahrerhauses wie hierin offenbart, bereitgestellt.

Das Verfahren umfasst ein Vormontieren einer Verkleidungsstruktur, wobei zumindest eine Sensoreinrichtung zur Erfassung von zumindest einer Umgebungsgröße in oder an der Verkleidungsstruktur angeordnet wird.

Das Verfahren umfasst ferner ein Anordnen der Verkleidungsstruktur, insbesondere nach dem Vormontieren, an einem oberen Endbereich einer Windschutzscheibenöffnung des Fahrerhauses innerhalb des Fahrerhauses.

Das Verfahren umfasst ferner ein Einsetzen einer Windschutzscheibe in die Windschutzscheibenöffnung, insbesondere nach dem Anordnen der Verkleidungsstruktur.

Gemäß einer Ausführungsform kann das Anordnen ein Verbinden der Verkleidungsstruktur mit einer Dachstruktur, vorzugsweise einer Dachablage und/oder einem Geräteträger, des Fahrerhauses, vorzugsweise ein Einhängen der Verkleidungsstruktur an oder in der Dachstruktur, umfassen.

Das Verbinden kann umfassen, dass zumindest ein Verbindungselement, vorzugsweise zumindest ein Führungselement, der Verkleidungsstruktur mit zumindest einem Dach-Verbindungselement, vorzugsweise zumindest einer Kulissenführung, der Dachstruktur verbunden, insbesondere an oder in dem zumindest einen Dach-Verbindungselement eingehängt, wird. Die verbundene, insbesondere eingehängte, Verkleidungsstruktur kann z. B. entlang des zumindest einen Dach-Verbindungselement in eine Zielposition bewegt werden.

Das Anordnen kann ferner, insbesondere nach dem Verbinden mit der Dachstruktur, umfassen, dass die zumindest eine Sensoreinrichtung signaltechnisch und/oder elektrisch, z. B. mit zumindest einem signaltechnischen und/oder elektrischen Verbinder, konnektiert (z. B. verbunden) wird.

Gemäß einer Ausführungsform kann das Anordnen, insbesondere nachdem die Verkleidungsstruktur mit der Dachstruktur verbunden ist und/oder nachdem die die zumindest eine Sensoreinrichtung signaltechnisch und/oder elektrisch konnektiert ist, ein Verschwenken der Verkleidungsstruktur, insbesondere in Richtung des Trägers. Das Anordnen kann ferner ein Fixieren der Verkleidungsstruktur zur Verkleidung eines Trägers des Fahrerhauses, vorzugsweise ein Verschrauben mit dem Träger, umfassen.

Zur Vermeidung von Wiederholungen sollen zuvor rein vorrichtungsgemäß offenbarte Merkmale des Fahrerhauses auch als verfahrensgemäß offenbart gelten und beanspruchbar sein. Gemäß einem weiteren allgemeinen Aspekt der Erfindung wird ein Nutzfahrzeug, vorzugsweise Lastkraftwagen, insbesondere Sattelzugmaschine, mit dem Fahrerhaus wie hierin offenbart bereitgestellt.

Gemäß einer Ausführungsvariante kann das Nutzfahrzeug in Abhängigkeit von der zumindest einen erfassten Umgebungsgröße in einem teilautonomen oder autonomen Fahrbetrieb betreibbar sein.

Die zumindest eine Umgebungsgröße kann eine Erfassung eines Fremdobjekts, z. B. eines Fremdfahrzeugs, eines Fußgängers und/oder eines Gebäudes, umfassen. Die zumindest eine Umgebungsgröße kann zumindest eine Messgröße des Fremdobjekts, z. B. eine Geschwindigkeit, ein Abstand, eine Position und/oder Maße (Höhe, Länge, Breite), umfassen.

Zumindest ein Erfassungsbereich der zumindest einen Sensoreinrichtung (in Vorwärtsfahrtrichtung des Nutzfahrzeugs) kann sich nach vorne erstrecken. Die zumindest eine Sensoreinrichtung kann in Vorwärtsfahrtrichtung das Nutzfahrzeugs nach vorne schauend angeordnet sein. Die zumindest eine erfasste Umgebungsgröße kann z. B. für (teil-)autonome Ausweichvorgänge, Bremsvorgänge, Spurwechsel und/oder Abbiegevorgänge genutzt werden.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Vorderansicht eines Nutzfahrzeugs 100 mit einem Fahrerhaus 50 gemäß einem Ausführungsbeispiel der vorliegenden Offenbarung;
- Figur 2: eine schematische Seitenansicht des Nutzfahrzeugs 100 mit angezeigtem Fahrersichtfeld 82A, 82B;
- Figur 3: eine schematische Ansicht einer Verkleidungsstruktur 10 gemäß einem Ausführungsbeispiel der vorliegenden Offenbarung;
- Figur 4: weitere schematische Ansichten der Verkleidungsstruktur 10;
- Figur 5: schematische Seitenansichten der Verkleidungsstruktur 10 mit einer Sonnenblende 42;
- Figuren 6-9: schematische Ansichten des Fahrerhauses 50 bzw. des Nutzfahrzeugs 100 mit verschiedenen Konfigurationen der zumindest einen Sensoreinrichtung 30A, 30B, 30C und der Scheibenwischervorrichtung; und
- Figur 10-11: schematische Darstellungen eines Verfahrens zur Montage des Fahrerhauses 50 gemäß einem Ausführungsbeispiel der vorliegenden Offenbarung.

Die in den Figuren gezeigten Ausführungsbeispiele stimmen zumindest teilweise überein, so dass ähnliche oder identische Teile mit den gleichen Bezugszeichen versehen sind und zu deren Erläuterung auch auf die Beschreibung der anderen Ausführungsbeispiele bzw. Figuren verwiesen wird, um Wiederholungen zu vermeiden.

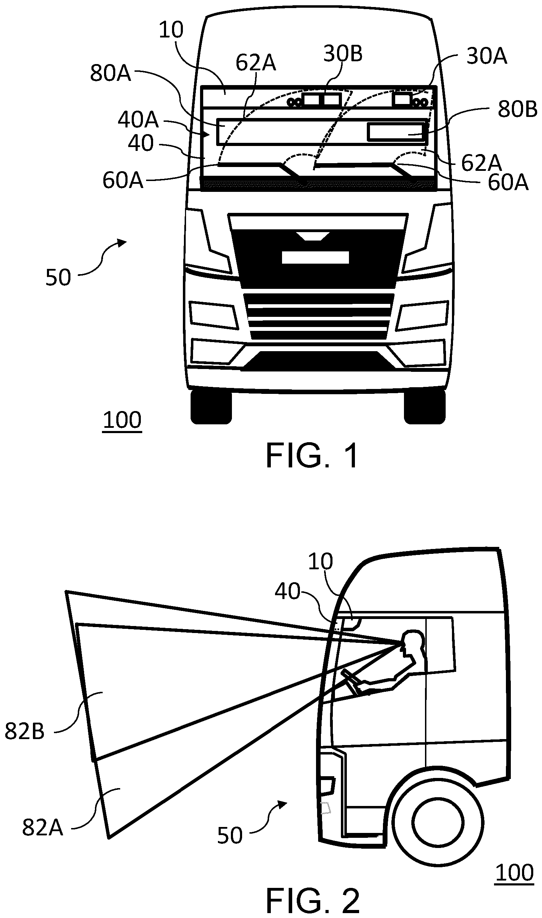

Figur 1 zeigt ein Nutzfahrzeug 100, vorzugsweise Lastkraftwagen, insbesondere Sattelzugmaschine, mit einem Fahrerhaus 50. Es versteht sich, dass das Fahrerhaus 50 auch unabhängig vom Nutzfahrzeug 100 einen Aspekt der vorliegenden Offenbarung darstellt.

Das Fahrerhaus 50 umfasst eine Windschutzscheibe 40, zumindest eine Sensoreinrichtung 30A, 30B zur Erfassung von zumindest einer Umgebungsgröße und eine Verkleidungsstruktur 10. Die zumindest eine Sensoreinrichtung 30A, 30B kann vorzugsweise, insbesondere in Vorwärtsfahrtrichtung des Nutzfahrzeugs, nach vorne ausgerichtet und/oder durch die Windschutzscheibe 40 hindurchschauend angeordnet sein. Die zumindest eine Sensoreinrichtung 30A, 30B kann jeweils zumindest eine Kamera, eine Radar-Sensoreinheit und/oder Lidar-Sensoreinheit umfassen.

Die zumindest eine Sensoreinrichtung 30A, 30B kann insbesondere dazu dienen, um das Nutzfahrzeug 100 in Abhängigkeit von der zumindest einen erfassten Umgebungsgröße in einem teilautonomen oder autonomen Fahrbetrieb zu betreiben. Die zumindest eine Umgebungsgröße kann z. B: eine Erfassung eines Fremdobjekts, z. B. eines Fremdfahrzeugs, und zumindest eine Messgröße des Fremdobjekts, z. B. eine Geschwindigkeit, ein Abstand und/oder eine Position, umfassen.

Die zumindest eine Sensoreinrichtung 30A, 30B kann z. B. eine erste Sensoreinrichtung 30A, die an einem fahrerseitigen Endbereich der Windschutzscheibe 40 und/oder der Verkleidungsstruktur 10 angeordnet ist, und/oder eine zweite Sensoreinrichtung 30B, die an einem Mittelbereich der Windschutzscheibe 40 und/oder der Verkleidungsstruktur 10 angeordnet ist, aufweisen.

Die Verkleidungsstruktur 10 ist an einem oberen Endbereich der Windschutzscheibe 40 innerhalb des Fahrerhauses 50 und/oder hinter der Windschutzscheibe 40 angeordnet, wobei die zumindest eine Sensoreinrichtung 30A, 30B in oder an der Verkleidungsstruktur 10 angeordnet, vorzugsweise zumindest abschnittsweise in der Verkleidungsstruktur 10 umhaust, ist. Die zumindest eine Sensoreinrichtung 30A, 30B kann z. B. mittels zumindest einer Rast-, Schraub und/oder Steckverbindung in oder an der Verkleidungsstruktur 10 befestigt sein.

Das Fahrerhaus 50 kann ferner einen (nicht gezeigten) Träger, insbesondere Querträger, umfassen, welcher insbesondere Teil eines Fahrerhausrohbaus des Fahrerhauses sein kann. Der Träger kann z. B. eine Windschutzscheibenöffnung des Fahrerhauses 50 oberseitig begrenzen und/oder sich zwischen zwei A-Säulen des Fahrerhauses 50 erstrecken, wobei die Verkleidungsstruktur 10 zur Verkleidung des Trägers, vorzugsweise von unten, am Träger angeordnet ist.

Der Träger kann insbesondere ein Windlauf sein und/oder die Verkleidungsstruktur 10 kann zumindest abschnittsweise als Windlaufverkleidung ausgeführt sein.

Das Fahrerhaus kann ferner eine Scheibenwischervorrichtung zum Wischen zumindest eines Wischbereichs 62A einer äußeren Windschutzscheibenoberfläche 40A aufweisen, wobei die zumindest eine Sensoreinrichtung 30A, 30B hinter dem Wischbereich angeordnet ist. Der zumindest eine Scheibenwischer 60A der Scheibenwischervorrichtung kann vorzugsweise so dimensioniert sein, dass ein Schnittbereich eines Erfassungsbereichs der zumindest einen Sensoreinrichtung 30A, 30B und der äußeren Windschutzscheibenoberfläche 40A, insbesondere vollständig, im zumindest einen Wischbereich liegt.

Die Scheibenwischervorrichtung kann insbesondere mehrere Scheibenwischer 60A aufweisen, wobei eine Anzahl der mehreren Scheibenwischer 60A einer Anzahl der mehreren Sensoreinrichtungen 30A, 30B entspricht und/oder jeweils einer der mehreren Scheibenwischer 60A einer der mehreren Sensorvorrichtungen 30A, 30B zugeordnet ist.

Beispielhaft ist in Figur 1 gezeigt, dass das Fahrerhaus 50 zwei gleichlaufende, d. h. synchron in die gleiche Richtung schwenkende, Haupt-Scheibenwischer 60A und zwei Sensoreinrichtungen 30A, 30 B umfasst, wobei der rechte Haupt-Scheibenwischer 60A der Sensoreinrichtung 30A und der linke Haupt-Scheibenwischer 60A der Sensoreinrichtung 30B zugeordnet ist.

Wie in den Figuren 1 und 2 beispielhaft gezeigt ist, ist die zumindest eine Sensoreinrichtung 30A, 30B durch die Anordnung in oder an der Verkleidungsstruktur 10 derart innerhalb des Fahrerhauses 50 angeordnet, dass die Sicht des Fahrers, insbesondere durch die Windschutzscheibe 40 hindurch, nicht beeinträchtigt ist. So ist das Fahrersichtfeld 80A, 82A des Fahrers, wenn sich dieser auf dem Fahrersitz innerhalb des Nutzfahrzeug 100 befindet, weiterhin größer als das gesetzliche Fahrersichtfeld 80B, 82B, d. h. das gesetzlich vorgeschriebene Mindestsichtfeld.

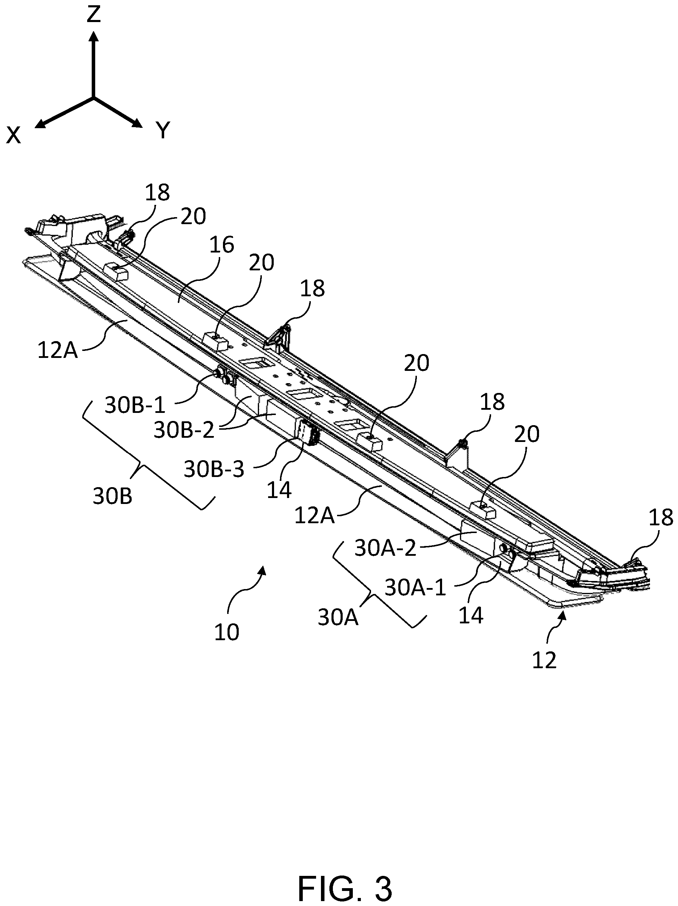

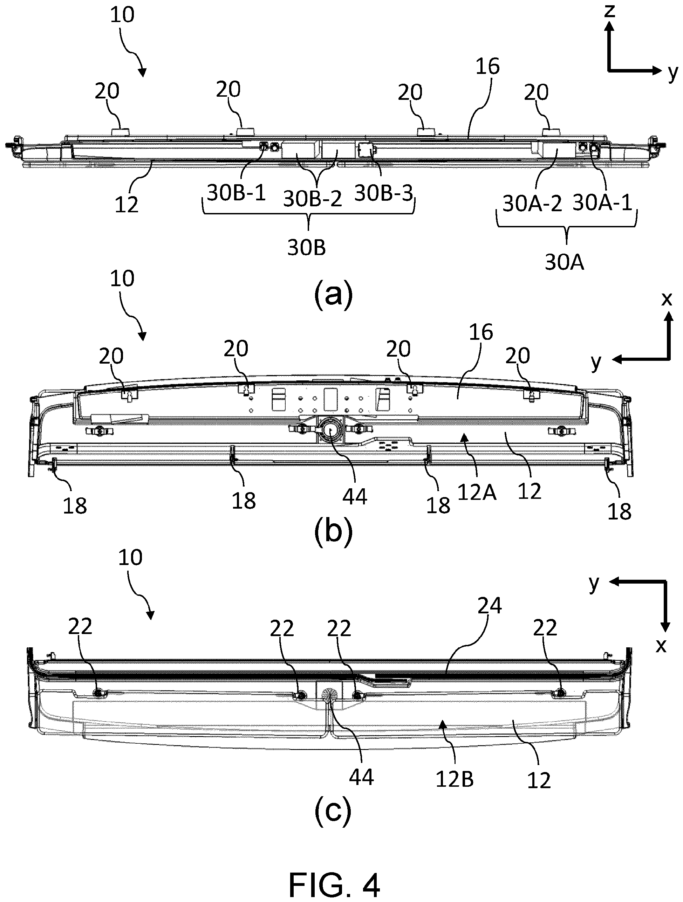

Die Figuren 3 und 4 zeigt eine beispielhafte Verkleidungsstruktur 10 in verschiedenen Ansichten.

Zum vereinfachten Vergleich ist die Verkleidungsstruktur 10 in den Figuren 3, 4 und 5 bezüglich der angezeigten x-, y- und z-Richtung gleich ausgerichtet. Im eingebauten Zustand kann die x-Richtung insbesondere der Längsrichtung bzw. der Vorwärtsfahrtrichtung des Nutzfahrzeugs 100 entsprechen. Die x-Richtung zeigt somit zur Windschutzscheibe 40 hin. Die y-Richtung kann der Querrichtung des Nutzfahrzeugs 100, z. B. der Richtung zwischen zwei A-Säulen des Fahrerhauses 50, und die z-Richtung kann die Hochrichtung des Nutzfahrzeug 100 entsprechen.

Die Verkleidungsstruktur 10 kann einen, vorzugsweise länglichen, Grundkörper 12 aufweisen, an dessen Oberseite 12A die zumindest eine Sensoreinrichtung 30A, 30B, 30C angeordnet sein können.

Die Verkleidungsstruktur 10 kann ferner eine mit dem Grundkörper 12 verbundene, und vorzugsweise in Längsrichtung der Verkleidungsstruktur 10 verlaufende, Abdeckstruktur 16, vorzugsweise Abdeckschiene, zur Abdeckung der zumindest einen Sensoreinrichtung 30A, 30B, 30C aufweisen.

Die Abdeckstruktur 16 kann z. B. zumindest einen Verbindungsabschnitt 20, insbesondere zumindest eine Schrauböffnung, zu Verbindung der Verkleidungsstruktur 10 mit dem Träger des Fahrerhauses 50 aufweisen. So kann die Abdeckstruktur 16 mit dem Träger direkt verbunden, vorzugsweise verschraubt, sein.

Die Verkleidungsstruktur 10 kann ferner zumindest ein Verbindungselement 18, vorzugsweise zumindest ein Führungselement, aufweisen, das an einer Oberseite 12A der Verkleidungsstruktur 10, vorzugsweise an einem der Windschutzscheibe 40 abgewandten Endbereich und/oder nach oben abragend, ausgebildet ist.

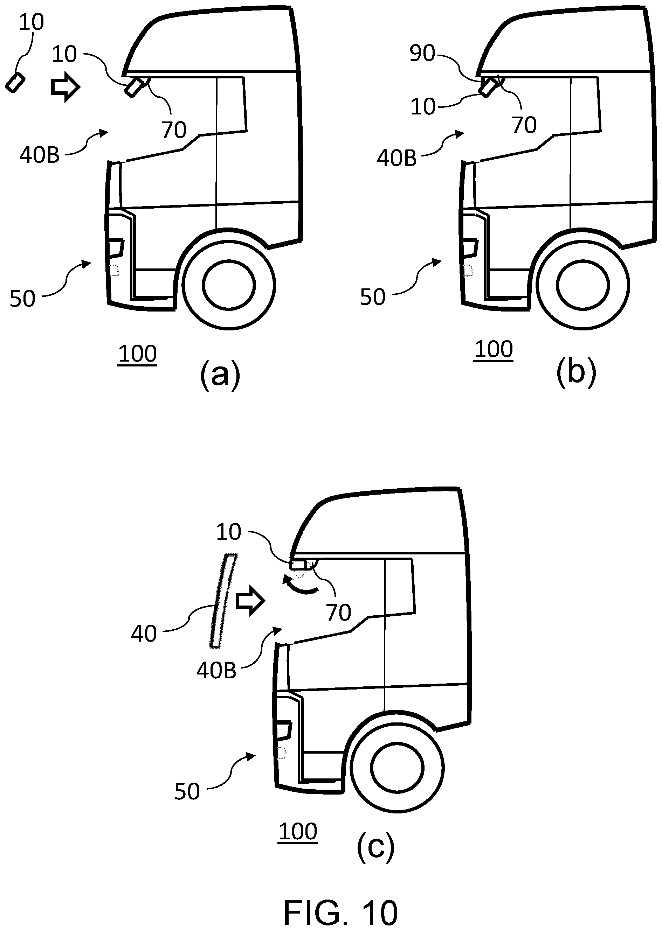

Mittels des zumindest einen Verbindungselements 18 kann die Verkleidungsstruktur 10 z. B. mit einer Dachstruktur 70 (in Figur 10 gezeigt), vorzugsweise einer Dachablage und/oder einem Geräteträger, des Fahrerhauses 50 verbunden bzw. verbindbar sein. Die Dachstruktur 70 kann in einem Dachbereich innerhalb des Fahrerhauses 50 angeordnet sein und zumindest einen Dach-Verbindungselement, vorzugsweise zumindest eine Kulissenführung, aufweisen. Das zumindest eine Verbindungselement 18 kann entsprechend mit dem zumindest einen Dach-Verbindungselement verbunden sein, vorzugsweise an oder in dem zumindest einen Dach-Verbindungselement eingehängt sein.

Die Verkleidungsstruktur 10 kann ferner weitere Zusatzkomponenten aufweisen. So kann ein Lautsprecher 44 in einer nach unten offenen Aufnahme der Verkleidungsstruktur 10, vorzugsweise in einem Mittenbereich, aufgenommen sein.

In den Figuren 3 und 4 ist ferner gezeigt, dass die zumindest eine Sensoreinrichtung 30A, 30B jeweils eine oder mehrere Sensoreinheiten aufweisen kann. Rein beispielhaft kann die Sensoreinrichtung 30A eine erste Sensoreinheit 30A-1, die z. B. mindestens eine Kamera umfasst, und eine zweite Sensoreinheit 30A-2, z. B. eine Lidar-Sensoreinheit, aufweisen. Die Sensoreinrichtung 30B kann beispielsweise eine erste Sensoreinheit 30B-1, die z. B. mindestens eine Kamera umfasst, eine zweite Sensoreinheit 30B-2, z. B. eine Lidar-Sensoreinheit, und eine dritte Sensoreinheit 30B-1, z. B. eine Radar-Sensoreinheit, aufweisen.

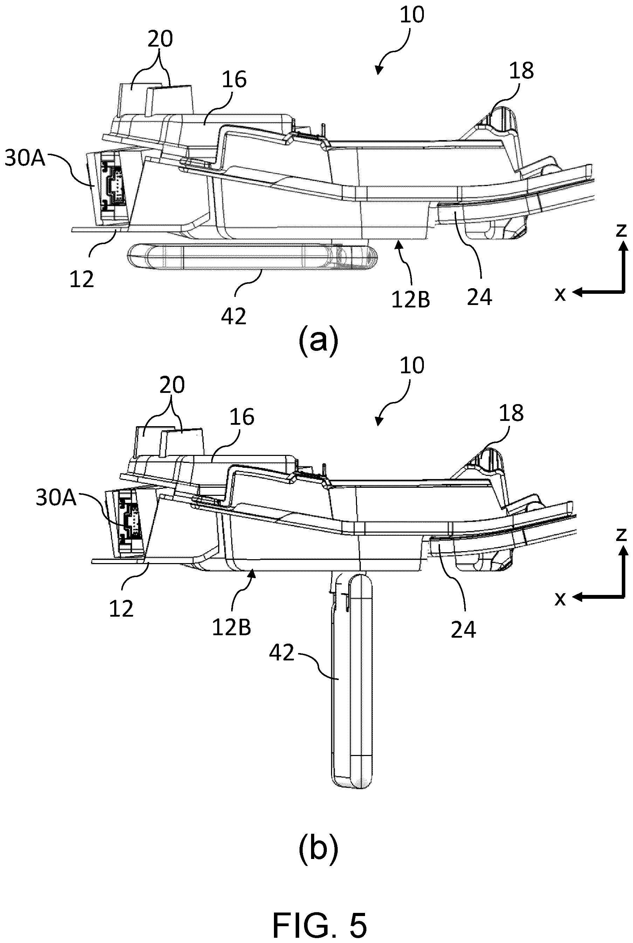

Wie in Figur 5 gezeigt, kann die Verkleidungsstruktur 10 ferner einen Längskanal 24 aufweisen, der zum Führen eines Verdunkelungsvorhangs an einer Unterseite 12B der Verkleidungsstruktur 10 ausgebildet ist.

Ferner kann zumindest eine Sonnenblende 42 an der Unterseite 12B der Verkleidungsstruktur 10 verschwenkbar angebracht sein. Die Unterseite 12B kann z. B. Schraublöcher aufweisen, in die die zumindest eine Sonnenblende verschraubt bzw. verschraubbar ist. Die zumindest eine Sonnenblende 42 kann vorzugsweise zwischen der Windschutzscheibe 40 und dem Längskanal angeordnet sein. Die zumindest eine Sonnenblende 42 kann insbesondere zwei nebeneinander angeordnete Sonnenblenden 42 umfassen, wobei der Lautsprecher 44 z. B. zwischen den zwei Sonnenblenden 42 angeordnet und/oder aufgenommen ist.

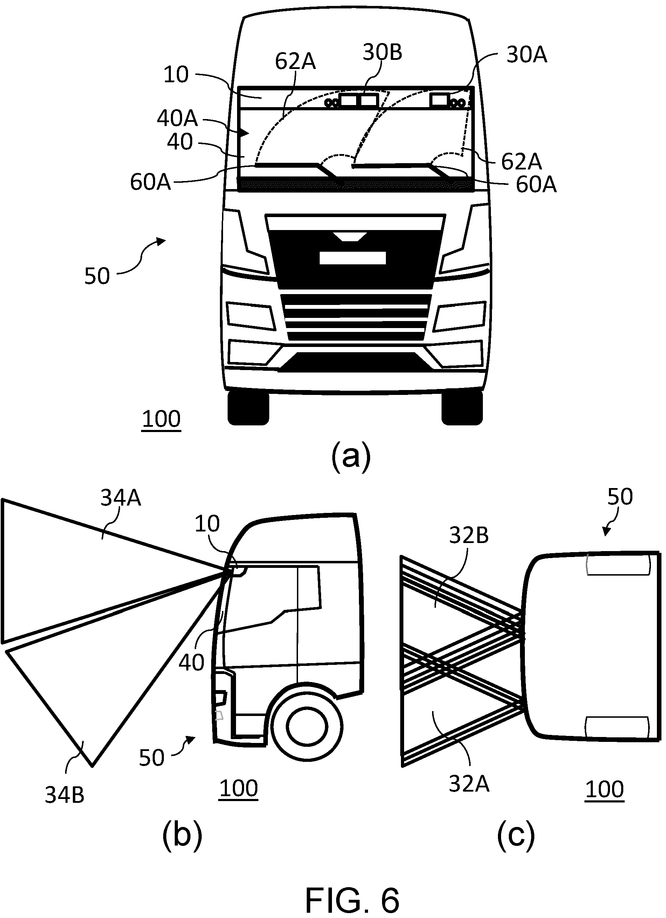

Die Figuren 6 bis 9 zeigen das Fahrerhaus 50 bzw. das Nutzfahrzeug 100 mit verschiedenen Konfigurationen hinsichtlich der zumindest einen Sensoreinrichtung 30A, 30B, 30C und der Scheibenwischervorrichtung.

Jede dieser Figuren 6 bis 9 umfasst jeweils (a) eine schematische Vorderansicht des Nutzfahrzeugs 100, (b) eine schematische Seitenansicht eines vorderen Abschnitts des Nutzfahrzeugs 100 mit beispielhaften Erfassungsbereichen 34A, 34B der zumindest einen Sensoreinrichtung 30A, 30B, 30C in Höhenrichtung des Nutzfahrzeugs 100, und (c) eine schematische Draufansicht des vorderen Abschnitts des Nutzfahrzeugs 100 mit beispielhaften Erfassungsbereichen 32A, 32B, 32C der zumindest einen Sensoreinrichtung 30A, 30B, 30C in Querrichtung des Nutzfahrzeugs 100.

Die schematischen Seitenansichten (b) sind in den Figuren 6 bis 9 im Wesentlichen identisch und zeigen, dass die zumindest eine Sensoreinrichtung 30A, 30B, 30C in Höhenrichtung des Nutzfahrzeugs 100 mehrere Erfassungsbereiche 34A, 34B aufweisen kann, um z. B. einen möglichst großen Bereich abdecken zu können. So kann z. B. ein Erfassungsbereich 34A im Wesentlichen senkrecht nach vorne gerichtet und ein Erfassungsbereich 34B schräg nach unten gerichtet sein.

Es versteht sich, dass die jeweilige Seitenansicht (b) bzw. Draufsicht (c) der Figuren 6 bis 9 lediglich beispielhaft Erfassungsbereiche in einer Ebene zeigen, um mögliche Ausrichtungen der zumindest einen Sensoreinrichtung 30A, 30B, 30C darzustellen. Die tatsächlichen Erfassungsbereiche der zumindest einen Sensoreinrichtung 30A, 30B, 30C sind selbstverständlich jeweils dreidimensional, z. B. konisch, aufgespannt. Die Erfassungsbereiche können allgemein auch als Sichtfelder bezeichnet sein.

Figur 6 zeigt eine Konfiguration, die im Wesentlichen dem Nutzfahrzeug 100 in Figur 1 entspricht. Die zumindest eine Sensoreinrichtung 30A, 30B weist hier die erste Sensoreinrichtung 30A, die an einem fahrerseitigen Endbereich der Windschutzscheibe 40 und/oder der Verkleidungsstruktur 10 angeordnet ist, und die zweite Sensoreinrichtung 30B, die an einem Mittelbereich der Windschutzscheibe 40 und/oder der Verkleidungsstruktur 10 angeordnet ist, auf.

Ferner weist die Scheibenwischvorrichtung zwei gleichlaufende, unterhalb der Windschutzscheibe 40 schwenkbar gelagerte Haupt-Scheibenwischer 60A auf.

Der rechte Haupt-Scheibenwischer 60A ist der Sensoreinrichtung 30A zugeordnet, d. h. die Sensoreinrichtung 30A ist hinter dem Wischbereich des rechten Haupt-Scheibenwischers 60A angeordnet.

Der linke Haupt-Scheibenwischer 60A ist entsprechend der Sensoreinrichtung 30B zugeordnet, d. h. die Sensoreinrichtung 30B ist hinter dem Wischbereich des linken Haupt-Scheibenwischers 60A angeordnet.

Dadurch kann die Sicht der Sensoreinrichtungen 30A, 30B, welche in Fahrzeuglängsrichtung nach vorne durch die Windschutzscheibe 40 hindurch hinausschauend ausgerichtet sind, bedarfsweise gereinigt werden.

Die beiden Sensoreinrichtungen 30A, 30B können in der Draufsicht z. B. den Erfassungsbereich 32A der Sensoreinrichtung 30A und den Erfassungsbereich 32B der Sensoreinrichtung 30B aufweisen, die in Fahrzeuglängsrichtung nach vorne ausgerichtet sind und sich z. B. teilweise überschneiden können.

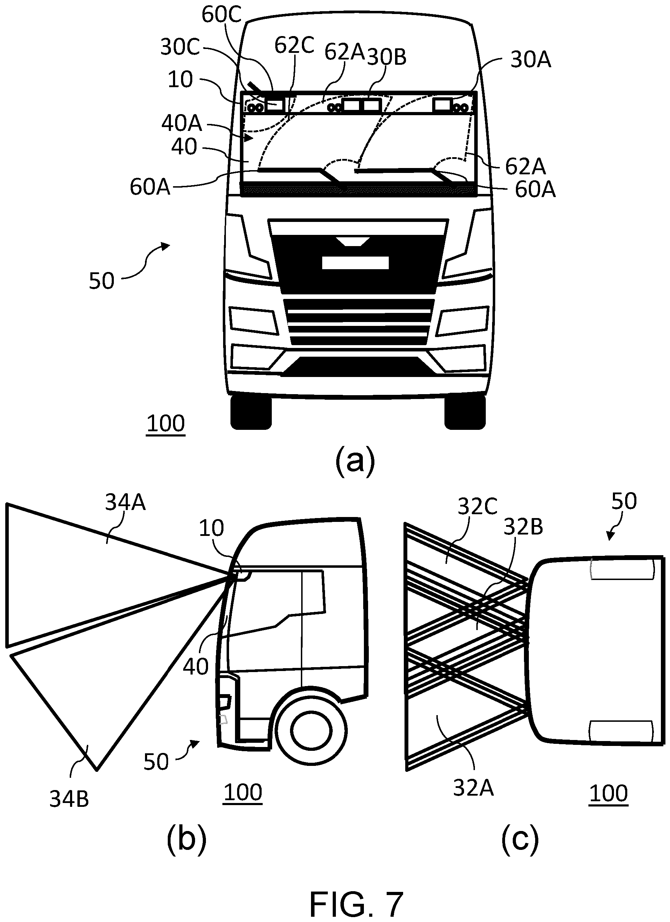

Figur 7 zeigt eine Konfiguration, die im Vergleich zur Figur 6 zusätzlich die Sensoreinrichtung 30C aufweist, die an einem beifahrerseitigen Endbereich der Windschutzscheibe 40 und/oder der Verkleidungsstruktur 10 angeordnet ist.

Da ein Schnittbereich des Erfassungsbereichs der Sensoreinrichtung 30C und der äußeren Windschutzscheibenoberfläche 40A in keinem Wischbereich der beiden Haupt-Scheibenwischer 60A liegt, kann ein zusätzlicher Hilfs-Scheibenwischer 60C vorgesehen sein, der oberhalb der Windschutzscheibe 40, insbesondere oberhalb der Sensoreinrichtung 30C, schwenkbar gelagert ist. Entsprechend kann der Hilfs-Scheibenwischer 60C der Sensoreinrichtung 30C zugeordnet sein, um dessen Sicht durch die Windschutzscheibe 40 hindurch bedarfsweise zu reinigen.

Die drei Sensoreinrichtungen 30A, 30B, 30C können in der Draufsicht z. B. den Erfassungsbereich 32A der Sensoreinrichtung 30A, den Erfassungsbereich 32B der Sensoreinrichtung 30B und den Erfassungsbereich 32C der Sensoreinrichtung 30C aufweisen, die in Fahrzeuglängsrichtung nach vorne ausgerichtet sind und sich z. B. teilweise überschneiden können.

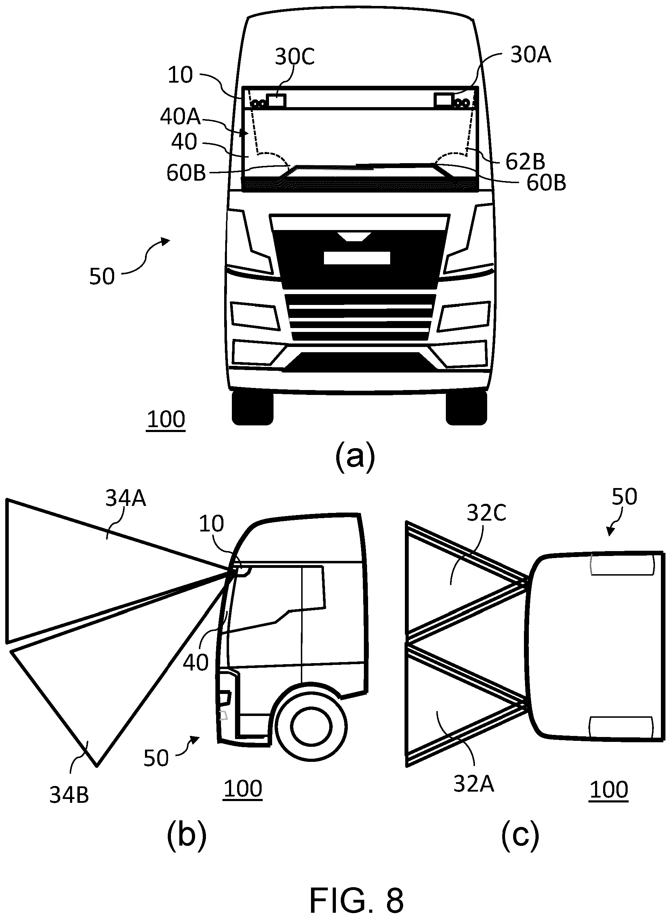

Figur 8 zeigt eine Konfiguration des Nutzfahrzeugs 100, die zwei Sensoreinrichtungen aufweist, nämlich die fahrerseitige Sensoreinrichtung 30A und die beifahrerseitige Sensoreinrichtung 30C.

Ferner weist die Scheibenwischvorrichtung zwei gegenläufige, unterhalb der Windschutzscheibe 40 schwenkbar gelagerte Haupt-Scheibenwischer 60B auf.

Der rechte Haupt-Scheibenwischer 60B ist der Sensoreinrichtung 30A zugeordnet, d. h. die Sensoreinrichtung 30A ist hinter dem Wischbereich des rechten Haupt-Scheibenwischers 60B angeordnet.

Der linke Haupt-Scheibenwischer 60B ist entsprechend der Sensoreinrichtung 30C zugeordnet, d. h. die Sensoreinrichtung 30C ist hinter dem Wischbereich des linken Haupt-Scheibenwischers 60B angeordnet.

Dadurch kann die Sicht der beiden Sensoreinrichtungen 30A, 30C, welche in Fahrzeuglängsrichtung nach vorne durch die Windschutzscheibe 40 hindurch hinausschauend ausgerichtet sind, bedarfsweise gereinigt werden.

Die beiden Sensoreinrichtungen 30A, 30C können in der Draufsicht z. B. den Erfassungsbereich 32A der Sensoreinrichtung 30A und den Erfassungsbereich 32C der Sensoreinrichtung 30C aufweisen, die in Fahrzeuglängsrichtung nach vorne ausgerichtet sind.

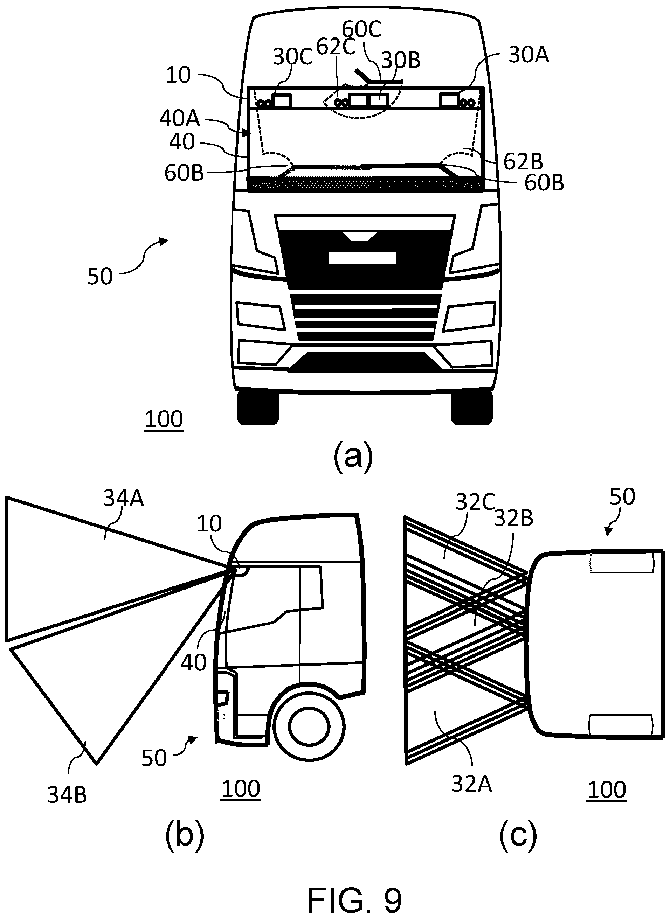

Figur 9 zeigt eine Konfiguration, die im Vergleich zur Figur 8 zusätzlich die Sensoreinrichtung 30B aufweist, die an einem Mittelbereich der Windschutzscheibe 40 und/oder der Verkleidungsstruktur 10 angeordnet ist.

Da ein Schnittbereich des Erfassungsbereichs der Sensoreinrichtung 30B und der äußeren Windschutzscheibenoberfläche 40A in keinem Wischbereich der beiden Haupt-Scheibenwischer 60B liegt, kann ein zusätzlicher Hilfs-Scheibenwischer 60C vorgesehen sein, der oberhalb der Windschutzscheibe 40, insbesondere oberhalb der Sensoreinrichtung 30B, schwenkbar gelagert ist. Entsprechend kann der Hilfs-Scheibenwischer 60C der Sensoreinrichtung 30B zugeordnet sein, um dessen Sicht durch die Windschutzscheibe 40 hindurch bedarfsweise zu reinigen.

Die drei Sensoreinrichtungen 30A, 30B, 30C können in der Draufsicht, ähnlich wie in der Konfiguration in Figur 7, die Erfassungsbereiche 32A, 32B, 32C aufweisen, die in Fahrzeuglängsrichtung nach vorne ausgerichtet sind und sich z. B. teilweise überschneiden können.

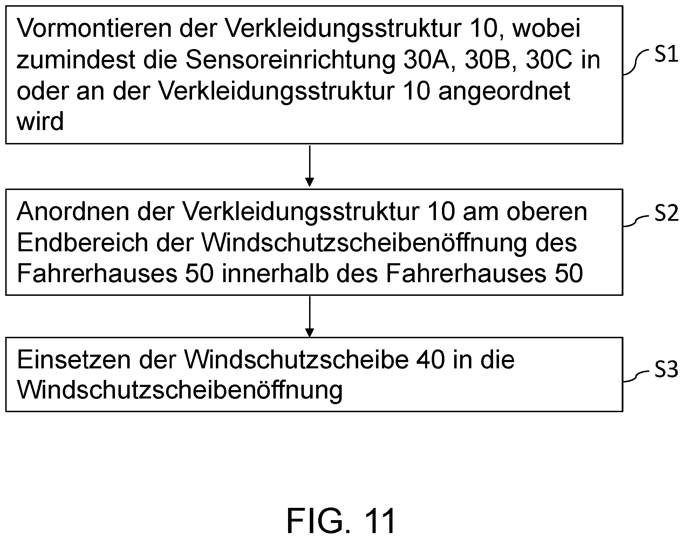

In den Figuren 10 und 11 ist ein beispielhaftes Verfahren zur Montage des Fahrerhauses 50 für das Nutzfahrzeug 100 dargestellt.

In Schritt S1 wird die Verkleidungsstruktur 10 vormontiert, wobei die zumindest eine Sensoreinrichtung 30A, 30B, 30C zur Erfassung von zumindest einer Umgebungsgröße in oder an der Verkleidungsstruktur 10 angeordnet wird.

In Schritt S2 wird die Verkleidungsstruktur 10 an einem oberen Endbereich der Windschutzscheibenöffnung 40B innerhalb des Fahrerhauses 50 angeordnet.

Das Anordnen kann, wie in der Darstellung (a) der Figur 10 gezeigt, z. B. umfassen, dass die vormontierte Verkleidungsstruktur 10 durch die Windschutzscheibenöffnung 40B hindurchgeführt und mit der Dachstruktur 70 des Fahrerhauses 50, insbesondere mittels des zumindest einen Verbindungselements 18, verbunden wird. Vorzugsweise wird die Verkleidungsstruktur 10 an oder in der Dachstruktur eingehängt.

Das Anordnen der Verkleidungsstruktur 10 kann ferner, insbesondere nach dem Verbinden mit der Dachstruktur 70, umfassen, dass die zumindest eine Sensoreinrichtung 30A, 30B, 30C signaltechnisch und/oder elektrisch, z. B. mit einem Verbinder 90, konnektiert und/oder die Verkleidungsstruktur 10 verschwenkt und anschließend zur Verkleidung des Trägers des Fahrerhauses 50 fixiert, vorzugsweise mit dem Träger verschraubt, wird. Das Konnektieren und das Verschwenken sind beispielhaft in der Darstellung (b) bzw. der Darstellung (c) der Figur 10 gezeigt.

In Schritt S3 wird schließlich die Windschutzscheibe 40 in die Windschutzscheibenöffnung 40B eingesetzt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale der unabhängigen Ansprüche jeweils unabhängig voneinander offenbart. Zusätzlich sind auch die Merkmale der Unteransprüche unabhängig von sämtlichen Merkmalen der unabhängigen Ansprüche offenbart.

### Bezugszeichenliste

- 10: Verkleidungsstruktur
- 12: Grundkörper
- 12A: Oberseite des Grundkörpers
- 12B: Unterseite des Grundkörpers
- 16: Abdeckstruktur
- 18: Verbindungselement
- 20: Verbindungsabschnitt
- 22: Schraublöcher
- 24: Längskanal
- 30A, 30B, 30C: Sensoreinrichtung
- 30A-1, 30A-2: Sensoreinheit
- 30B-1, 30B-2, 30B-3: Sensoreinheit
- 32A, 32B, 32C: Erfassungsbereich
- 34A, 34B: Erfassungsbereich
- 40: Windschutzscheibe
- 40A: Äußere Windschutzscheibenoberfläche
- 40B: Windschutzscheibenöffnung
- 42: Sonnenblende
- 44: Lautsprecher
- 50: Fahrerhaus
- 60A, 60B: Haupt-Scheibenwischer
- 60C: Hilfs-Scheibenwischer
- 62A, 62B, 62C: Wischbereich
- 70: Dachstruktur
- 80B, 82B: Gesetzliches Fahrersichtfeld
- 80A, 82A: Fahrersichtfeld
- 90: Verbinder
- 100: Nutzfahrzeug
- S1, S2, S3: Verfahrensschritt

## Patentansprüche

1. Fahrerhaus (50) für ein Nutzfahrzeug (100), vorzugsweise Lastkraftwagen, insbesondere Sattelzugmaschine, umfassend:
eine Windschutzscheibe (40);
zumindest eine Sensoreinrichtung (30A, 30B, 30C) zur Erfassung von zumindest einer Umgebungsgröße, vorzugsweise wobei die zumindest eine Sensoreinrichtung (30A, 30B, 30C) nach vorne ausgerichtet und/oder durch die Windschutzscheibe (40) hindurchschauend angeordnet ist; und
eine Verkleidungsstruktur (10), die an einem oberen Endbereich der Windschutzscheibe (40) innerhalb des Fahrerhauses (50) und/oder hinter der Windschutzscheibe (40) angeordnet ist, wobei die zumindest eine Sensoreinrichtung (30A, 30B, 30C) in oder an der Verkleidungsstruktur (10) angeordnet ist.

2. Fahrerhaus (50) nach Anspruch 1, wobei das Fahrerhaus (50) ferner umfasst:
einen Träger, der vorzugsweise eine Windschutzscheibenöffnung (40B) des Fahrerhauses (50) oberseitig begrenzt und/oder sich zwischen zwei A-Säulen des Fahrerhauses (50) erstreckt, wobei die Verkleidungsstruktur (10) zur Verkleidung des Trägers, vorzugsweise von unten, am Träger angeordnet ist.

3. Fahrerhaus (50) nach Anspruch 1 oder 2, wobei der Träger ein Windlauf ist und/oder die Verkleidungsstruktur (10) zumindest abschnittsweise als Windlaufverkleidung ausgeführt ist.

4. Fahrerhaus (50) nach einem der vorherigen Ansprüche, wobei die Verkleidungsstruktur (10) einen, vorzugsweise länglichen, Grundkörper (12) aufweist und die zumindest eine Sensoreinrichtung (30A, 30B, 30C) an einer Oberseite des Grundkörpers (12A), insbesondere zugänglich und/oder austauschbar, angeordnet ist, vorzugsweise wobei die Oberseite des Grundkörpers (12A) dem Träger zugewandt ist.

5. Fahrerhaus (50) nach Anspruch 4, wobei die Verkleidungsstruktur (10) ferner eine mit dem Grundkörper (12) verbundene, und vorzugsweise in Längsrichtung der Verkleidungsstruktur (10) verlaufende, Abdeckstruktur (16), vorzugsweise Abdeckschiene, zur Abdeckung der zumindest einen Sensoreinrichtung (30A, 30B, 30C) aufweist.

6. Fahrerhaus (50) nach Anspruch 2 und 5, wobei die Abdeckstruktur (16) mit dem Träger direkt verbunden, vorzugsweise verschraubt, ist.

7. Fahrerhaus (50) nach einem der vorherigen Ansprüche, wobei das Fahrerhaus (50) ferner umfasst:
eine Dachstruktur (70), vorzugsweise eine Dachablage und/oder einen Geräteträger, die in einem Dachbereich innerhalb des Fahrerhauses (50) angeordnet ist, wobei die Verkleidungsstruktur (10), vorzugsweise an einem der Windschutzscheibe (40) abgewandten Ende, mit der Dachstruktur (70) verbunden ist, vorzugsweise an oder in der Dachstruktur (70) eingehängt ist.

8. Fahrerhaus (50) nach Anspruch 7, wobei
die Verkleidungsstruktur (10) zumindest ein Verbindungselement (18), vorzugsweise zumindest ein Führungselement, aufweist, das an einer Oberseite (12A) der Verkleidungsstruktur (10), vorzugsweise an einem der Windschutzscheibe (40) abgewandten Endbereich und/oder nach oben abragend, ausgebildet ist;
die Dachstruktur (70) zumindest einen Dach-Verbindungselement, vorzugsweise zumindest eine Kulissenführung, aufweist; und
das zumindest eine Verbindungselement (18) mit dem zumindest einen Dach-Verbindungselement verbunden ist, vorzugsweise an oder in dem zumindest einen Dach-Verbindungselement eingehängt ist.

9. Fahrerhaus (50) nach einem der vorherigen Ansprüche, wobei die zumindest eine Sensoreinrichtung (30A, 30B, 30C) mittels zumindest einer Rast-, Schraub und/oder Steckverbindung in oder an der Verkleidungsstruktur (10) befestigt ist.

10. Fahrerhaus (50) nach einem der vorherigen Ansprüche, wobei die zumindest eine Sensoreinrichtung (30A, 30B, 30C) jeweils zumindest eine Kamera, eine Radar-Sensoreinheit und/oder Lidar-Sensoreinheit umfasst.

11. Fahrerhaus (50) nach einem der vorherigen Ansprüche, wobei das Fahrerhaus (50) ferner umfasst:
eine Scheibenwischervorrichtung (60A; 60B, 60C) zum Wischen zumindest eines Wischbereichs (62A; 62B, 62C), wobei die zumindest eine Sensoreinrichtung (30A, 30B, 30C) hinter dem Wischbereich angeordnet ist.

12. Fahrerhaus (50) nach Anspruch 11, wobei die Scheibenwischervorrichtung (60A; 60B, 60C)
einen Scheibenwischer (60C) aufweist, der oberhalb der Windschutzscheibe (40), und vorzugweise oberhalb einer der zumindest einen Sensoreinrichtung (30A, 30B, 30C), schwenkbar gelagert ist, und/oder
zumindest einen Scheibenwischer (60A; 60B), vorzugsweise zwei, insbesondere gleichlaufende oder gegenläufige, Scheibenwischer (60A; 60B), aufweist, der unterhalb der Windschutzscheibe schwenkbar gelagert ist.

13. Fahrerhaus (50) nach Anspruch 11 oder 12, wobei
die zumindest eine Sensoreinrichtung (30A, 30B, 30C) mehrere Sensoreinrichtungen (30A, 30B, 30C) aufweist und die Scheibenwischervorrichtung (60A; 60B, 60C) mehrere Scheibenwischer (60A; 60B, 60C) aufweist, und
eine Anzahl der mehreren Scheibenwischer (60A; 60B, 60C) einer Anzahl der mehreren Sensoreinrichtungen (30A, 30B, 30C) entspricht und/oder jeweils einer der mehreren Scheibenwischer (60A; 60B, 60C) einer der mehreren Sensorvorrichtungen (30A, 30B) zugeordnet ist.

14. Fahrerhaus (50) nach einem der vorherigen Ansprüche, wobei die zumindest eine Sensoreinrichtung (30A, 30B, 30C) aufweist:
eine erste Sensoreinrichtung (30A), die an einem fahrerseitigen Endbereich der Windschutzscheibe (40) und/oder der Verkleidungsstruktur (10) angeordnet ist;
eine zweite Sensoreinrichtung (30B), die an einem Mittelbereich der Windschutzscheibe (40) und/oder der Verkleidungsstruktur (10) angeordnet ist; und/oder
eine dritte Sensoreinrichtung (30C), die an einem beifahrerseitigen Endbereich der Windschutzscheibe (40) und/oder der Verkleidungsstruktur (10) angeordnet ist.

15. Fahrerhaus (50) nach einem der vorherigen Ansprüche, wobei:
die Verkleidungsstruktur (10) ferner einen Längskanal (24) aufweist, der zum Führen eines Verdunkelungsvorhangs an einer Unterseite (12B) der Verkleidungsstruktur (10) ausgebildet ist; und/oder
zumindest eine Sonnenblende (42) an einer Unterseite (12B) der Verkleidungsstruktur (10) verschwenkbar angebracht ist, vorzugsweise wobei die Sonnenblende (42) zwischen der Windschutzscheibe (40) und dem Längskanal (24) angeordnet ist; und/oder
ein Lautsprecher (44) in einer nach unten offenen Aufnahme der Verkleidungsstruktur (10), vorzugsweise in einem Mittenbereich und/oder zwischen zwei Sonnenblenden (42), aufgenommen ist.

16. Verfahren zur Montage eines Fahrerhauses (50) für ein Nutzfahrzeug (100), vorzugsweise eines Fahrerhauses (50) nach einem der vorherigen Ansprüche, umfassend:
Vormontieren (S1) einer Verkleidungsstruktur (10), wobei zumindest eine Sensoreinrichtung (30A, 30B, 30C) zur Erfassung von zumindest einer Umgebungsgröße in oder an der Verkleidungsstruktur (10) angeordnet wird;
Anordnen (S2) der Verkleidungsstruktur (10) an einem oberen Endbereich einer Windschutzscheibenöffnung (40B) des Fahrerhauses (50) innerhalb des Fahrerhauses (50); und
Einsetzen (S3) einer Windschutzscheibe (40) in die Windschutzscheibenöffnung (40B).

17. Verfahren nach Anspruch 16, wobei das Anordnen (S2) ein Verbinden der Verkleidungsstruktur (10) mit einer Dachstruktur (70) des Fahrerhauses (50), vorzugsweise ein Einhängen der Verkleidungsstruktur (10) an der Dachstruktur (70), umfasst.

18. Verfahren nach Anspruch 16 oder 17, wobei das Anordnen (S2) ein Verschwenken der Verkleidungsstruktur (10) und anschließendes Fixieren zur Verkleidung eines Trägers des Fahrerhauses (50), vorzugsweise ein Verschrauben mit dem Träger, umfasst.

19. Nutzfahrzeug (100), vorzugsweise Lastkraftwagen, insbesondere Sattelzugmaschine, mit einem Fahrerhaus (50) nach einem der Ansprüche 1 bis 15.

20. Nutzfahrzeug (100) nach Anspruch 19, wobei das Nutzfahrzeug (100) in Abhängigkeit von der zumindest einen erfassten Umgebungsgröße in einem teilautonomen oder autonomen Fahrbetrieb betreibbar ist.
